# EUROPÄISCHE PATENTSCHRIFT

(11) **EP 2 497 619 B1**
(45) Veröffentlichungstag und Bekanntmachung des Hinweises auf die Patenterteilung: **08.05.2019**
(21) Anmeldenummer: 12154911.7
(22) Anmeldetag: 10.02.2012
(51) Int. Cl.: B29C 49/42

(54) **Verfahren und Vorrichtung zum Recyceln von Druckgas**
Method and device for recycling compressed gas
Procédé et dispositif de recyclage de gaz sous pression

(30) Priorität: 07.03.2011 DE 102011005189
(43) Veröffentlichungstag der Anmeldung: 12.09.2012
(73) Patentinhaber: Krones AG, 93073 Neutraubling (DE)
(72) Erfinder: Voth, Klaus, 93083 Obertraubling (DE); Rossmann, Stefan, 93077 Bad Abbach (DE)
(74) Vertreter: Grünecker Patent- und Rechtsanwälte PartG mbB

(56) Entgegenhaltungen:
- EP-A1- 1 777 056
- EP-B1- 2 142 830
- WO-A2-2006/024462
- WO-A2-2007/028493
- DE-A1-102007 015 105
- US-A1- 2004 173 949

## Beschreibung

Die Erfindung bezieht sich auf ein Verfahren und eine Vorrichtung zum Recyceln von Druckgas. Ein derartiges Verfahren und eine derartige Vorrichtung sind aus der DE 10 2005 042 926 bekannt. Mit dem bekannten Verfahren wird gebrauchte Druckluft aus einer Hohlkörperherstellungsmaschine, beispielsweise einer Streckblasmaschine, zur Wiederverwendung zurückgeführt. Streckblasmaschinen benötigen einen relativ hohen Anteil an Druckluft, um vorgefertigte und erwärmte Flaschenrohlinge zum fertigen Behälter aufzublasen. Die zum Aufblasen verwendete Luft weist nach dem Aufblasen zwar einen verringerten, jedoch noch relativ hohen Druck auf. Um zu verhindern, dass dieser Druck verloren geht, wird die Druckluft nach dem Blasen der Behälter in den Druckerzeuger (Kompressor) zurückgeführt. Nachteilig ist dabei, dass die Rückspeisung bei einem gewissen Mindestdruck erfolgen muss, um eine Einspeisung zu ermöglichen. Es ist somit nicht möglich, alle anfallende Druckluft zu recyceln.

Da im Blasprozess der Streckblasmaschine verschiedene Prozesse gefahren werden, fällt Druckluft mit verschiedenen Drücken an, von der durch das bekannte Verfahren nur der oberhalb des Mindestdrucks liegende Teil wiederverwertet werden kann.

Der Erfindung liegt die Aufgabe zugrunde, ein Verfahren und eine Vorrichtung zum Recyceln von Druckgas bereitzustellen, die in der Lage ist, einen wesentlich höheren Anteil an Druckluft mit unterschiedlichen Drücken zu recyceln.

DE102007015105 offenbart den Oberbegriff des Anspruchs 1 und EP1777056 offenbart den Oberbegriff des Anspruchs 4.

Die Aufgabe wird bei einem Verfahren durch die Merkmale des Anspruchs 1 und bei einer Vorrichtung durch die Merkmale des Anspruchs 4 gelöst.

Durch die erfindungsgemäße Ausgestaltung können auch Druckgase mit niedrigem Druck recycelt werden, so dass insgesamt eine wesentlich höhere Recyclingrate erreicht werden kann.

Zweckmäßigerweise wird die rückgeführte Druckluft vor der Einspeisung in den Druckgaserzeuger zunächst gesammelt, um die Druckeinspeisung im Wesentlichen konstant zu halten.

Die Einspeisung des Druckgases kann an den unterschiedlichsten Stellen im Verlauf des Druckerhöhungsprozesses im Druckgaserzeuger stattfinden, wobei für jedes rückgeführte Druckniveau eine geeignete Stelle gefunden werden kann. So wird beispielsweise das Druckgas mit dem niedrigsten Druck vor der ersten Druckerhöhungsstufe und ein Druckgas mit einem höheren Druck zwischen der ersten und der zweiten Druckerhöhungsstufe eingespeist.

Ausführungsbeispiele der Erfindung werden nachfolgend anhand der Zeichnungen näher erläutert. Es zeigen:
- Fig. 1: ein erstes Ausführungsbeispiel einer erfindungsgemäßen Vorrichtung, und
- Fig. 2: ein zweites Ausführungsbeispiel einer erfindungsgemäßen Vorrichtung.

Nachfolgend wird die Erfindung anhand eines bekannten Streckblasverfahrens zum Herstellen von Hohlkörpern aus Kunststoff dargelegt. Diese Verfahren werden in einer Streckblasmaschine 1, die nur schematisch und beispielhaft in den Figuren dargestellt ist, durchgeführt, und benötigen Druckluft, meist auf unterschiedlichen Druckniveaus, die von einem oder mehreren Druckgaserzeugern 2 bereitgestellt werden.

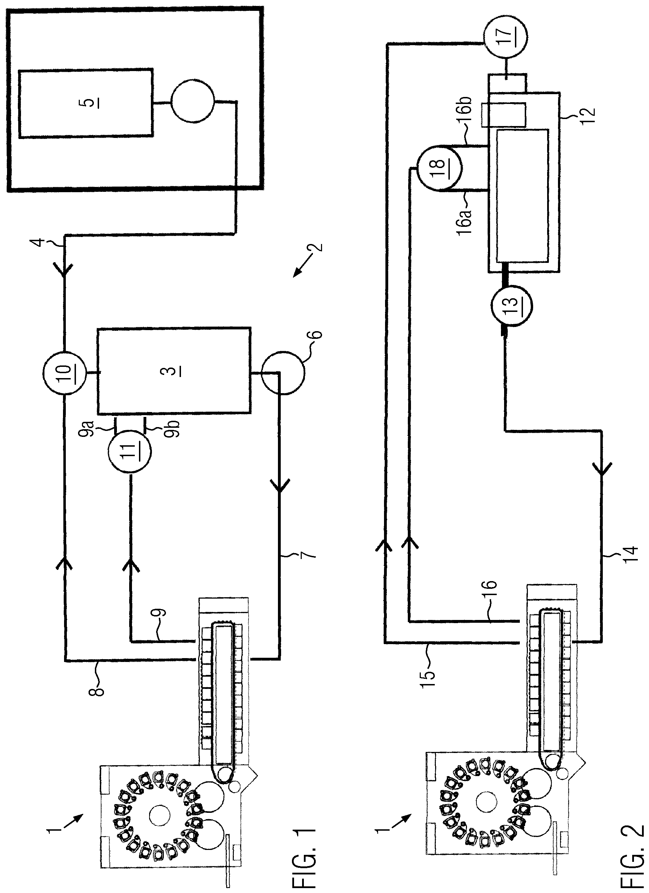

Im Ausführungsbeispiel gemäß Fig. 1 enthält der Druckgaserzeuger 2 einen Booster 3, der ein Kolben- oder Turbokompressor sein kann. Der Booster 3 wird über ein Niederdrucknetz 4 von einem Niederdruckkompressor 5 mit vorgespanntem Druckgas, nachfolgend Druckluft, versorgt. Im Booster 3 wird die Druckluft anschließend auf den benötigten Druck gebracht und über einen Puffertank 6 in die Blasluftleitung 7 zur Streckblasmaschine 1 gefördert, wo sie in den entsprechenden Arbeitsprozessen Verwendung findet.

Nach Beendigung des Prozesses werden die Druckluftvolumen, nicht wie beim Stand der Technik, insgesamt gesammelt und unter dem sich ergebenden Mischdruck zurückgeführt, sondern die einzelnen Druckluftvolumen werden nach Restdruck in verschiedenen Druckstufen getrennt über eine Mehrzahl Rückführleitungen, d.h. wenigstens eine erste Rückführleitung 8 und eine zweite Rückführleitung 9, in den Druckgaserzeuger 2 zurückgespeist. Im dargestellten Ausführungsbeispiel wird durch die Rückführleitung 8 Druckgas mit der niedrigeren Druckstufe, d.h. bevorzugt 4 bis 7 bar, und über die zweite Rückführleitung 9 Druckgas mit der höheren Druckstufe, d.h. beispielsweise 10 bis 13 bar, zurückgeführt.

Dabei mündet die erste Rückführleitung 8 in einen Puffertank 10, in dem auch das Niederdrucknetz 4 vom Niederdruckkompressor 5 mündet, der das beim Druckgasverbraucher 1 verlorengegangene Druckgasvolumen ergänzt. Erst aus diesem Puffertank 10 gelangt recyceltes und "neues" Druckgas gemischt in den Booster 3, und zwar vor dessen erster Druckerhöhungsstufe.

Die zweite Rückführleitung 9 mündet über einen eigenen Puffertank 11 in den Booster 3 und zwar an einer Stelle im Druckerhöhungsprozess, die zum Druck des rückgeführten Druckgases passt. Anhand der Druckluftleitungen 9a und 9b, wird der Puffertank 11 in das Kompressorsystem 3 integriert und dient hierbei als Druckluftpuffer für die interne Druckluftsteuerung/- regelung. Der Kessel dient als Puffer zwischen den Druckerhöhungsstufen zur Gewährleistung des Druckluftverhältnisses im Kompressor (Regelung wird somit erleichtert) sowie als Einspeisepunkt für das Druckluftrecycling. Da hierbei zwei Druckerhöhungsstufen des Kompressors getrennt werden, gibt es eine Druckluftleitung 9a von der ersten Druckerhöhungsstufe zum Kessel 11 sowie vom Kessel 11 zur nächsten Druckerhöhungsstufe (Leitung 9b). Im dargestellten Ausführungsbeispiel kann die zweite Rückführleitung 9 zwischen der ersten und zweiten Druckerhöhungsstufe des Boosters 3 eingeleitet werden. Weitere Rückführleitungen in andere Bereiche des Druckerhöhungsprozesses im Druckgaserzeuger 2 können vorgesehen werden.

Durch Steuerung des Druckgaserzeuger werden die einzelnen Druckerhöhungsstufen, je nach rückgespeicherter Druckgasmenge, entlastet oder in Last geschalten. Bei einer Einleitung zwischen zwei Druckerhöhungsstufen sind die vorangegangenen Stufen so ausgelegt, dass diese den maximalen Bedarf liefern können und eine (Teil-)Entlastung nur dann erfolgt, wenn Druckgas rückgeführt wird.

Obwohl nicht dargestellt, sind alle Einspeisepunkte mit den üblichen und benötigten Bauteilen, wie Rückschlagventilen, Druckmessungen, Absperrhähnen oder dgl. versehen. Die Puffertanks wirken als Regelstrecke für die Druckhysteresis und können bei entsprechender Steuerung der Druckerzeugung entfallen.

Fig. 2 zeigt eine erfindungsgemäße Vorrichtung unter Verwendung wiederum einer Streckblasmaschine 1 und eines Druckgaserzeuger 2, wobei der Druckgaserzeuger hier einen Standardkompressor 12 enthält. Der Standardkompressor 12 liefert Druckgas im gewünschten Druck und leitet ihn über einen Puffertank 13 und eine Blasluftleitung 14 in den Druckgasverbraucher in Form der Blasmaschine 1 ein. Die erste Stufe des Standardkompressors 12 kann aus einem Schrauben-, Kolben- oder Turbokompressor bestehen. Die restlichen Stufen für die restliche Verdichtung können beispielsweise Kolben- oder Turbokompressoren sein.

Die für den jeweiligen Arbeitsprozess im Druckgasverbraucher, d.h. der Blasmaschine 1, benutzte Druckluft wird druckabhängig (Druckstufen) gesammelt und über eine Mehrzahl von Rückführleitungen zurück in die passenden Druckerhöhungsstufen des Druckgaserzeuger 2 geleitet. Im dargestellten Ausführungsbeispiel ist eine erste Rückführleitung 15 und eine zweite Rückführleitung 16 vorgesehen. Die erste Rückführleitung dient der Rückführung von Druckluft mit geringem Druck, wobei dieser bei Verwendung eines vom atmosphärischen Druck aus verdichtenden Standardkompressors bei ca. 1 bar liegen kann. Die erste Rückführleitung 15 mündet in einen Puffertank 17, der vor der ersten Verdichtungsstufe mit dem Druckgaserzeuger 2 verbunden ist.

Die zweite Rückführleitung 16 mündet wiederum über einen Puffertank 18 und zwei mit verschiedenen Druckerhöhungsstufen verbundene Leitungen 16a, 16b (analog zu Fig. 1) in den Standardkompressor 12. Anhand der Druckluftleitungen 16a und 16b, wird der Puffertank 18 in das Kompressorsystem 12 integriert und dient hierbei als Druckluftpuffer für die interne Druckluftsteuerung/-regelung. Über die zweite Rückführleitung 16 kann wiederum Druckgas im Druckbereich zwischen 10 bis 13 bar rückgespeist werden.

Auch hier wirken die Puffer als Regelstrecke für die Druckhysteresis und können bei entsprechender Steuerung der Druckerzeugung entfallen. Auch in Fig. 2 sind alle Einspeisepunkte mit Rückschlagventilen, Druckmessungen, Absperrhähnen usw. versehen.

Beide Varianten der Fig. 1 und 2 können ähnlich betrieben werden. So wird in beiden Fällen die zu recycelnde Druckluft in die jeweiligen Tanks 10, 11 bzw. 17, 18 gepumpt. Ist das Recycelvolumen zu gering, sinkt der Druck in den Puffertanks, so dass zusätzlich bei einer Einspeisung vor dem Druckgaserzeuger 2 Druckluft aus dem Niederdrucknetz entnommen oder bei einer Einspeisung zwischen die Druckstufen des Druckgaserzeugers die vorhergehend geschaltete Stufe von "entlastet" auf "Last" geschaltet wird. Somit erfolgt eine Regelung durch das Kompressorsystem und das Recyclingvolumen kann optimal genutzt werden.

In Abwandlung der beschriebenen und gezeichneten Ausführungsbeispiele kann die Erfindung bei anderen Druckgasverbrauchern und anderen Druckgaserzeugern eingesetzt werden. Die Erfindung ist auch einsetzbar, wenn ein Verbraucher durch mehrere Druckgaserzeuger mit Druckluft versorgt wird oder ein Druckgaserzeuger mehrere Verbraucher versorgt. Auch die Art der Druckgaserzeuger ist unkritisch.

## Patentansprüche

1. Verfahren zum Recyceln von Druckgas, wobei das in einem Druckgasverbraucher (1), insbesondere einer Behälterblasmaschine, benutzte Druckgas in einen Druckgaserzeuger (2) rückgeführt wird, wobei das Druckgas aus dem Druckgasverbraucher (1) nach Druckstufen getrennt aufgefangen und nach Druckstufen getrennt wenigstens einem ersten und einem zweiten Druckbereich des Druckerzeugers (2) zugeführt wird;
**dadurch gekennzeichnet, dass**
das Druckgas vor dem Zuführen zu dem ersten Druckbereich des Druckerzeugers (2) in einem ersten Puffertank (10, 17) gesammelt wird; und
das Druckgas vor dem Zuführen zu dem zweiten Druckbereich des Druckerzeugers (2) in einem zweiten Puffertank (9, 18) gesammelt wird.

2. Verfahren nach Anspruch 1 , wobei das Druckgas mit dem niedrigsten Druck vor der ersten Druckerhöhungsstufe des Druckerzeugers (2) eingespeist wird.

3. Verfahren nach Anspruch 1 oder 2, wobei das Druckgas mit dem höheren Druck zwischen unterschiedlichen Druckerhöhungsstufen des Druckerzeugers (2) eingespeist wird.

4. Vorrichtung zum Recyceln von Druckgas aus einem Druckgasverbraucher (1), insbesondere einer Behälterblasmaschine, wobei der Druckgasverbraucher über einen Rückführleitung mit einem Eingang eines Druckgaserzeugers (2) verbunden ist, wobei wenigstens zwei Rückführleitungen (8, 9, 15, 16) zum Rückführen von Druckgas unterschiedlicher Drücke auf unterschiedliche Druckstufen des Druckerzeugers (2) vorgesehen sind;
**gekennzeichnet durch**
einen ersten Puffertank (10, 17), der zwischen der ersten (8, 15) der zwei Rückführleitungen (8, 9, 15, 16) und dem Druckerzeuger (2) angeschlossen ist; und
einen zweiten Puffertank (9, 18), der zwischen der zweiten (9, 16) der zwei Rückführleitungen (8, 9, 15, 16) und dem Druckerzeuger (2) angeschlossen ist.

5. Vorrichtung nach Anspruch 4, wobei eine erste Rückführleitung (8, 15) vor der ersten Druckerhöhungsstufe in den Druckerzeuger (2) einmündet.

6. Vorrichtung nach Anspruch 4 oder 5, wobei eine weitere Rückführleitung (9, 16) zwischen Druckerhöhungsstufen in den Druckerzeuger (2) einmündet.

## Claims

1. Method for recycling compressed gas wherein the compressed gas used in a compressed gas consumer (1), in particular a container blow-moulding machine, is fed back into a compressed gas generator (2), wherein the compressed gas from the compressed gas consumer (1) is separately collected according to pressure stages and, separated by pressure stages, fed to at least a first and second pressure range of the pressure generator (2) **characterized in that**
the compressed gas is collected in a first collection tank (10, 17) before it is fed to the first pressure range of the pressure generator (2); and
the compressed gas is collected in a second collection tank (9, 18) before it is fed to the second pressure range of the pressure generator (2).

2. Method according to claim 1, wherein the compressed gas with the lowest pressure is fed in before the first pressurization stage of the pressure generator (2).

3. Method according to one of the claims 1 or 2, wherein the compressed gas with the higher pressure is fed in between different pressurization stages of the pressure generator (2).

4. Device for recycling compressed gas from a compressed gas consumer (1), particularly a container blow-moulding machine, wherein the compressed gas consumer is connected to an input of a compressed gas generator (2) via a return line, wherein at least two return lines (8, 9, 15, 16) are provided for returning compressed gas at different pressures to different pressure stages of the pressure generator (2);
**characterized by**
a first collection tank (10, 17) that is connected between the first one (8, 15) of the two return lines (8, 9, 15, 16) and the pressure generator (2); and
a second collection tank (9, 18) that is connected between the second one (9, 16) of the two return lines (8, 9, 15, 16) and the pressure generator (2).

5. Device according to claim 4, wherein a first return line (8, 15) discharges into the pressure generator (2) before the first pressurization stage.

6. Device according to claim 4 or 5, wherein a further return line (9, 16) discharges into the pressure generator (2) between pressurization stages.

## Revendications

1. Procédé de recyclage de gaz sous pression, d'après lequel le gaz sous pression utilisé dans un récepteur-consommateur de gaz sous pression (1), notamment d'une machine de moulage par soufflage de contenants, est ramené dans un générateur de gaz sous pression (2), et d'après lequel le gaz sous pression est capté à partir du récepteur-consommateur de gaz sous pression (1) en étant séparé selon des paliers de pression, et est amené, en étant séparé selon des paliers de pression, à au moins une première et une deuxième zone de pression du générateur de pression (2),
**caractérisé en ce que**
le gaz sous pression, avant d'être amené à la première zone de pression du générateur de pression (2), est collecté dans un premier réservoir tampon (10, 17) ; et le gaz sous pression, avant d'être amené à la deuxième zone de pression du générateur de pression (2), est collecté dans un deuxième réservoir tampon (9, 18).

2. Procédé selon la revendication 1, d'après lequel le gaz sous pression avec la pression la plus basse est introduit dans le générateur de pression, en amont du premier étage d'élévation de pression du générateur de pression (2).

3. Procédé selon la revendication 1 ou la revendication 2, d'après lequel le gaz sous pression avec la pression plus élevée est introduit dans le générateur de pression, entre différents étages d'élévation de pression du générateur de pression (2).

4. Dispositif de recyclage de gaz sous pression en provenance d'un récepteur-consommateur de gaz sous pression (1), notamment d'une machine de moulage par soufflage de contenants, dispositif dans lequel le récepteur-consommateur de gaz sous pression est relié, par l'intermédiaire d'une conduite de recyclage, à une entrée d'un générateur de gaz sous pression (2), et dans lequel sont prévues au moins deux conduites de recyclage (8, 9, 15, 16) pour ramener du gaz sous pression de différentes pressions à des étages de pression différents du générateur de pression (2),
**caractérisé par**
un premier réservoir tampon (10, 17), qui est raccordé entre la première (8, 15) des deux conduites de recyclage (8, 9, 15, 16) et le générateur de pression (2) ; et
un deuxième réservoir tampon (9, 18), qui est raccordé entre la deuxième (9, 16) des deux conduites de recyclage (8, 9, 15, 16) et le générateur de pression (2) .

5. Dispositif selon la revendication 4, dans lequel une première conduite de recyclage (8, 15) débouche dans le générateur de pression (2), en amont du premier étage d'élévation de pression.

6. Dispositif selon la revendication 4 ou la revendication 5, dans lequel une autre conduite de recyclage (9, 16) débouche dans le générateur de pression (2), entre des étages d'élévation de pression.
